# EUROPEAN PATENT SPECIFICATION

(11) **EP 2 372 344 B1**
(45) Date of publication and mention of the grant of the patent: **10.02.2016**
(21) Application number: 11160645.5
(22) Date of filing: 31.03.2011
(51) Int. Cl.: G01N 21/35, G01N 21/39

(54) **Method for analysing a gaseous component present in a hermetically sealed container**
Verfahren zur Analyse einer Gaskomponente in einem hermetisch verschlossenen Behälter
Méthode d'analyse d'un composant gazeux dans un récipient hermétiquement fermé

(30) Priority: 31.03.2010 IT BO20100198
(43) Date of publication of application: 05.10.2011
(73) Proprietor: Bonfiglioli Engineering S.r.l., 44049 Vigarano Mainarda (FE) (IT)
(72) Inventor: Bonfiglioli, Giuseppe, 44047 Sant'Agostino (Ferrara) (IT)
(74) Representative: Firmati, Leonardo

(56) References cited:
- EP-A2- 0 826 956
- EP-A2- 1 808 683
- WO-A1-2006/130016
- US-A1- 2005 084 974
- US-A1- 2010 067 012

## Description

This invention relates to a method for analysing a gaseous component present in a hermetically sealed container.

Many food or pharmaceutical products, be they in liquid, solid or granular form, contain ingredients or components that are sensitive to atmospheric gases, especially oxygen and water vapour. Prolonged exposure to these gases causes the products to deteriorate. Pharmaceuticals, for example, to which express reference is made below but without thereby limiting the scope of the invention, may lose their efficacy or even become harmful to the consumer's health.

For this reason, pharmaceuticals containing ingredients sensitive to atmospheric gases are normally packaged in sterile containers in a vacuum or filled with an inert gas. These containers are often in the form of hermetically sealed vials or bottles.

The vials or bottles are filled with the pharmaceutical in a vacuum or in an inert gas in a sterile environment in order to avoid contamination from the outside environment.

Next, each vial or bottle is subjected to a non-destructive quality test which checks it for leaks.

A widely used technique for checking vials and bottles for leaks comprises analysing the gaseous component in their headspace by absorption spectroscopy.

This technique, known as Tunable Diode Laser Absorption Spectroscopy (TDLAS), is used on vials or bottles which are completely or substantially transparent to light, and is based on the consideration that a gas contained in a vial or bottle, when crossed by radiation of suitable wavelength, absorbs the radiation to a greater or lesser extent according to its quantity.

The concentration of the gas being analysed, for example oxygen or water vapour, can be calculated by analysing the absorption spectrum of the radiation and on the basis of Beer's law. By comparing that concentration with a reference value, the airtight property of the vial or bottle can be inferred.

To detect the absorption spectrum, the vial or bottle is placed in a measuring station between a laser emitter and a receiver. The frequency of the emitted laser beam is adjusted on the absorption frequency of the gas being analysed, for example oxygen or water vapour.

To avoid the measurement being altered by external factors, it is essential, as already mentioned, that the vial or bottle be made of a material (for example, glass) which is transparent to laser radiation, but also that the environment surrounding the vial or bottle be free of the gas being analysed.

To make the environment meet this requirement, the prior art teaches enveloping the vial or bottle in a flow of dry air or nitrogen during measurement. This operation is known as "purging".

For example, if the gas being analysed is oxygen, the vial or bottle is placed in a flow of nitrogen, whereas if the gas being analysed is water vapour, the vial or bottle is placed in nitrogen and/or dry air.

In practice, however, it has been found that the purge gas flow is sometimes insufficient to cleanse the environment around the vials or bottles. In other words, purging is not always sufficient to meet the requirements of the measuring system. Consequently, the result of measurement may be uncertain and hence unreliable.

An example of such prior art solution is known from document EP1808683.

A further solution is known from document WO 2006/130016, which teaches the inspection of sealed containers wherein the light path is filled with a liquid in order to deplete ambient gas containing the target gas.

However, even in this case the result of measurement may be uncertain and hence unreliable.

This invention has for an aim to provide a method for analysing a gaseous component present in a hermetically sealed container which overcomes the above mentioned disadvantage.

According to the invention, a method is provided for analysing a gaseous component present in a hermetically sealed container comprising the features set out in one or more of the accompanying claims.

The technical features of the invention are clearly described in the claims below and its advantages are apparent from the detailed description which follows, with reference to the accompanying drawings which illustrate a preferred embodiment of the invention provided merely by way of example without limiting the scope of the inventive concept, and in which:
- Figure 1 shows an apparatus used to implement the method according to the invention; and
- Figures 2 to 6 schematically illustrate successive steps of implementing the method according to the invention.

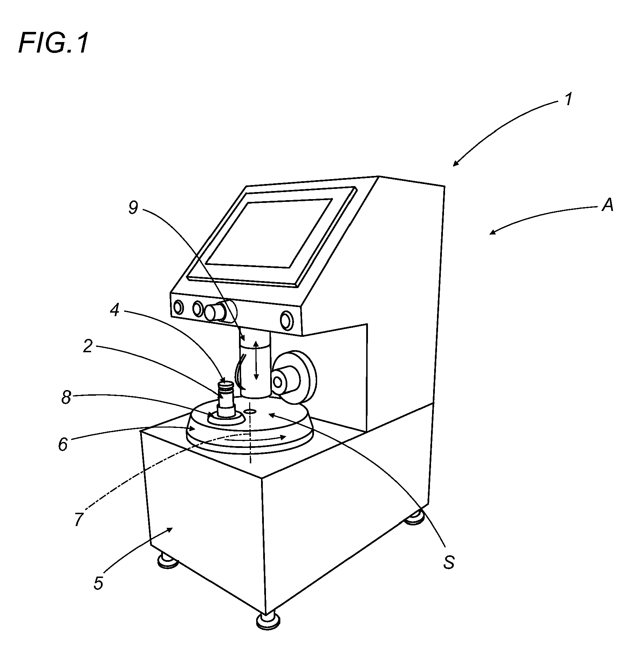

The numeral 1 in Figure 1 denotes in its entirety an apparatus for analysing a gaseous component present in a hermetically sealed container 2.

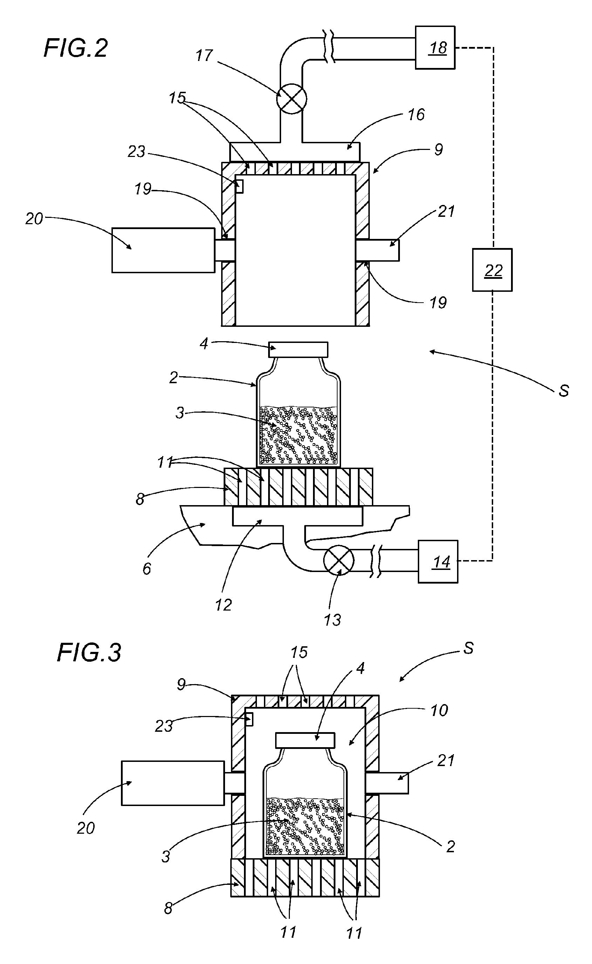

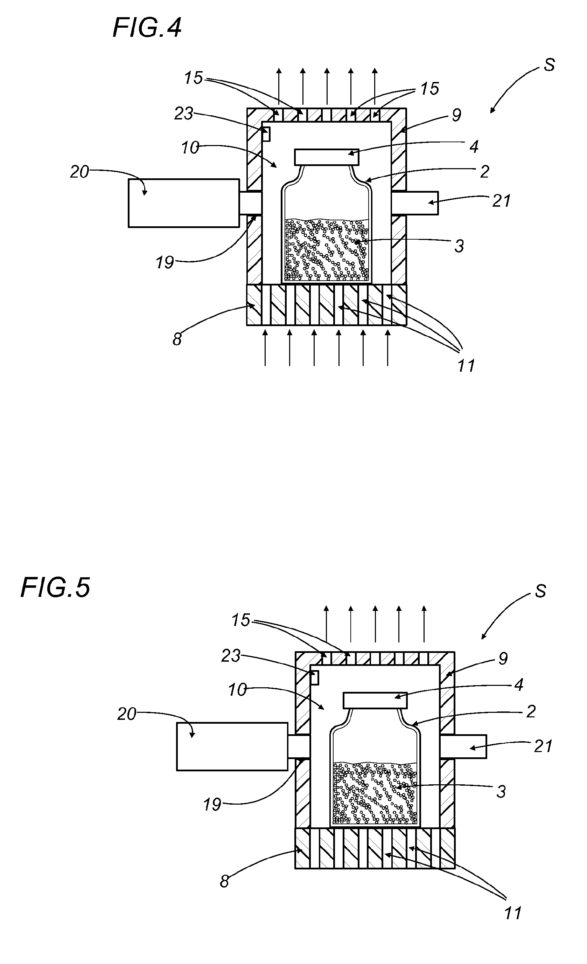

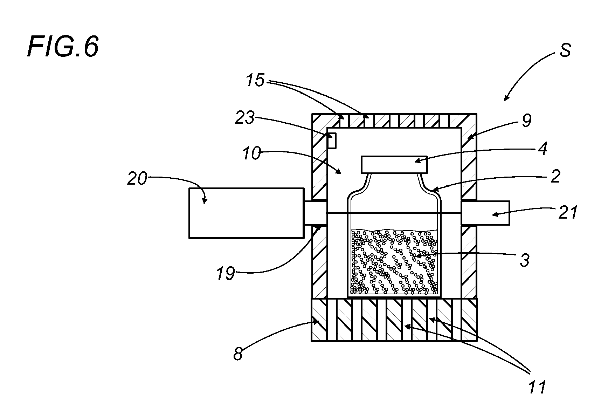

The container 2, illustrated schematically also in Figures 2 to 6, is partially filled with a product 3 and is made of a material which is completely or substantially transparent to light, such as glass, for example. More specifically, the container 2 is completely or substantially transparent to Near Infrared (NIR) laser radiation.

Generally speaking, the product 3 may be a foodstuff or a pharmaceutical, in liquid, solid or granular form. In the example shown, the product 3 is a pharmaceutical in granular form.

The container 2 is a sterile vial or bottle, with a cap 4 sealing the mouth at the top of it.

The headspace of the container 2, between the product 3 and the cap 4, is in a vacuum, where by "vacuum" is meant a condition where the headspace contains a gaseous component, in particular air, at a pressure which is markedly lower than atmospheric pressure.

In another embodiment, the headspace of the container 2, between the product 3 and the cap 4, contains an inert gas at atmospheric pressure.

The apparatus 1 forms part of a unit A for non-destructively testing the container 2 for leaks.

The apparatus 1 comprises a frame 5 that mounts a container 2 supporting turntable 6.

The turntable 6 is power-driven and rotatably mounted on the frame 5 to turn about a central vertical axis 7. Near the periphery of it, the turntable 6 has a housing 8 for receiving the container 2.

As it turns, the turntable 6 positions the housing 8, and hence the container 2, at a measuring station S where the above mentioned gaseous component is analysed by absorption spectroscopy.

More specifically, a measurement is performed at the station S in order to ascertain the concentration of water vapour present in the container 2 between the product 3 and the cap 4.

Alternatively, a measurement is performed at the station S in order to ascertain the concentration of oxygen present in the container 2 between the product 3 and the cap 4.

In another embodiment, at the station S, a measurement is performed to ascertain the concentration of water vapour and another measurement is performed to ascertain the concentration of oxygen.

At the station S, the apparatus 1 has a tube 9 mounted above the turntable 6 and open at its downward facing end.

The tube 9 is power-driven and slidably mounted on the frame 5 to perform a straight vertical movement towards and away from the turntable 6.

At its upper end limit position (Figure 2) the tube 9 is spaced far enough from the turntable 6 to allow the container 2 to pass under it. At its lower end limit position (Figures 3-6), the tube 9 hermetically engages with the housing 8 to form with the latter a sealed, airtight inspection chamber 10.

The housing 8 is provided with a plurality of through holes 11 leading to a distributor 12 located under the turntable 6.

The distributor 12 is connected, through a valve 13, to a source 14 of a pressurized gas supply flow.

If, or when, a measurement is performed at the station S to ascertain the concentration of water vapour present in the container 2 between the product 3 and the cap 4, the gaseous fluid consists of nitrogen and/or dry air. If, or when, a measurement is performed at the station S to ascertain the concentration of oxygen present in the container 2 between the product 3 and the cap 4, the gaseous fluid consists of nitrogen.

The upper wall of the tube 9 is provided with a plurality of through holes 15 leading to a manifold 16 located above the tube 9.

The manifold 16 is connected, through a valve 17, to a suction source 18.

The lateral wall of the tube 9 has two diametrically opposite through holes 19. At one of the two holes 19, the tube 9 hermetically mounts a NIR (Near Infrared) laser beam emitter 20, while at the other hole 19, the tube 9 hermetically mounts a receiver 21.

The turntable 6, the tube 9, the sources 14 and 18, the valves 13 and 17, the emitter 20 and the receiver 21 are driven and coordinated by a control unit 22 as described below.

To check it for leaks, the container 2 is placed in the housing 8 on the turntable 6. Next, the turntable 6 turns the container 2 and stops it at the station S, under the tube 9, which is in the raised position.

At this point, the tube 9 is lowered and placed in contact with the housing 8 to form the sealed, airtight inspection chamber 10.

In this condition, the container 2 is positioned between the laser emitter 20 and the receiver 21, ready for the concentration of the water vapour and/or oxygen present inside the container 2 itself, between the product 3 and the cap 4, to be ascertained by Tunable Diode Laser Absorption Spectroscopy (TDLAS).

Before emitting the laser beam to analyse the spectrum of beam absorption by the water vapour and/or oxygen present in the container 2, there is a step of depressurizing the chamber 10.

The depressurizing step substantially creates a vacuum in the chamber 10; more specifically, it gradually reduces the pressure of the chamber 10 to a (relative) value of around -980/990 hPa.

The depressurizing step is preceded by a supply and suction step whereby the above mentioned gas flow is respectively fed into and extracted from the inspection chamber 10.

The gas flow, which, as mentioned above, may consist of nitrogen and/or dry air depending on whether TDLAS is being used to measure the concentration of water vapour or oxygen, is intended to strike and envelop the container 2 in a preliminary sealed chamber "purge" operation.

The gas flow is fed into the chamber 10 through the holes 11 and under the control of the control unit 22. At the same time as the gas flow is fed into the chamber 10, the control unit 22 causes the gas flow to be extracted from the chamber 10 through the holes 15. That way, the "purge" gas flow strikes the container 2 from the bottom up.

The step of depressurizing the chamber 10 is accomplished by prolonging the suction step so it continues until after the end of the gas flow supply step. In other words, the control unit 22 causes the valve 13 to be closed during the suction step and prolongs the latter until the predetermined degree of vacuum is reached.

A this point, the control unit 22 causes the valve 17 to close.

Once the chamber 10 has been purged and placed in a vacuum, the laser emitter 20 is activated.

It is important to note that the path of the laser beam is confined inside the inspection chamber 10, which is entirely or substantially without water vapour and/or oxygen.

Based on the signal from the receiver 21 and on its internal programming, the control unit 22 infers the value of the concentration of water vapour and/or oxygen present in the container 2 and compares the value with a reference value. The result of the comparison indicates whether the container 2 is correctly sealed or must be rejected as defective.

Simultaneously with the spectroscopic analysis, a single pressure measurement, or preferably a series of isolated pressure measurements, can be performed using a sensor 23 connected to the inspection chamber 10 in order to detect whether or not the airtightness of the container 2 has failed.

The pressure measurements may be carried out after or at the same time as the step of depressurizing the inspection chamber 10.

In an alternative embodiment not illustrated, the apparatus 1 forms part of a line for the non-destructive testing of a plurality of containers 2, for example a batch or series of batches of containers 2. In this case, the turntable 6 has, near its periphery, a plurality of housings 8 uniformly distributed around the axis 7.

As it turns, the turntable 6 positions the housings 8, and hence the respective containers 2, one after the other in the measuring station S.

The invention has evident industrial applications and can be modified and adapted in several ways without thereby departing from the scope of the inventive concept. Moreover, all the details of the invention may be substituted by technically equivalent elements.

## Claims

1. A method for analysing a gaseous component present in a hermetically sealed container (2); the method comprising the steps of placing the container (2) in a measuring station (S) between a laser emitter (20) and a receiver (21); emitting the laser beam towards receiver (21) and through the portion of the container (2) where the gaseous component is located; analysing the spectrum of laser beam absorption by the gaseous component; inferring from said analysis the concentration of the gaseous component; the method being **characterized in that** it comprises a step of locking the container (2) in an inspection chamber (10) and a step of depressurizing the inspection chamber (10) such that it is free of the gas being analysed ; the steps of emitting and receiving the laser beam following the depressurizing step and the path of the laser beam being confined inside the inspection chamber (10).

2. The method according to claim 1, **characterized in that** the depressurizing step is preceded by a supply and suction step whereby a gas flow is respectively fed into and extracted from the inspection chamber (10); the flow striking and enveloping the container (2).

3. The method according to claim 2, **characterized in that** the depressurizing step is obtained by prolonging the suction step so it continues until after the end of the gas flow supply step.

4. The method according to claim 2 or 3, **characterized in that** the gas flow consists of dry air.

5. The method according to claim 2 or 3, **characterized in that** the gas flow consists of nitrogen.

6. The method according to claim 2 or 3, **characterized in that** the gas flow consists of a mixture of dry air and nitrogen.

7. The method according to any of the claims from 1 to 6, **characterized in that** the depressurizing step substantially creates a vacuum inside the inspection chamber (10).

8. The method according to any of the claims from 1 to 7, **characterized in that** it comprises at least one step of measuring the pressure inside the chamber (10) in order to detect whether or not the airtightness of the container (2) has failed.

9. The method according to claim 8, **characterized in that** one pressure measurement is performed after the step of depressurizing the inspection chamber (10).

10. The method according to claim 8, **characterized in that** one pressure measurement is performed simultaneously with the step of depressurizing the inspection chamber (10).

## Patentansprüche

1. Verfahren zur Analyse einer Gaskomponente in einem hermetisch verschlossenen Behälter (2), wobei das Verfahren folgende Schritte umfasst: Platzieren des Behälters (2) in einer Messstation (S) zwischen einem Lasersender (20) und einem Empfänger (21), Senden des Laserstrahls zum Empfänger (21) und durch den Abschnitt des Behälters (2), in dem sich die Gaskomponente befindet, Analysieren des Spektrums der Laserstrahlabsorption durch die Gaskomponente, Ableiten aus dieser Analyse der Konzentration der Gaskomponente, wobei das Verfahren **dadurch gekennzeichnet ist, dass** es einen Schritt zum Verriegeln des Behälters (2) in einer Inspektionskammer (10) und einem Schritt zum Druckabbau aus der Inspektionskammer (10) umfasst, sodass diese frei vom zu analysierenden Gas ist, wobei die Schritte des Sendens und Empfangens des Laserstrahls auf den Schritt des Druckabbaus folgen und der Weg des Laserstrahls in der Inspektionskammer (10) begrenzt ist.

2. Verfahren nach Anspruch 1, **dadurch gekennzeichnet, dass** vor dem Schritt des Druckabbaus ein Schritt zum Versorgen und Absaugen stattfindet, wobei ein Gasstrom jeweils in die Inspektionskammer (10) eingeleitet bzw. daraus abgesaugt wird und der Strom den Behälter (2) streift und diesen umhüllt.

3. Verfahren nach Anspruch 2, **dadurch gekennzeichnet, dass** der Schritt des Druckabbaus durch Verlängern des Absaugschritts erhalten wird, sodass dieser bis nach dem Ende des Schritts zum Versorgen des Gasstroms weitergeführt wird.

4. Verfahren nach Anspruch 2 oder 3, **dadurch gekennzeichnet, dass** der Gasstrom aus trockener Luft besteht.

5. Verfahren nach Anspruch 2 oder 3, **dadurch gekennzeichnet, dass** der Gasstrom aus Stickstoff besteht.

6. Verfahren nach Anspruch 2 oder 3, **dadurch gekennzeichnet, dass** der Gasstrom aus einer Mischung aus trockener Luft und Stickstoff besteht.

7. Verfahren nach einem der Ansprüche 1 bis 6, **dadurch gekennzeichnet, dass** der Schritt zum Druckabbau im Wesentlichen ein Vakuum in der Inspektionskammer (10) erzeugt.

8. Verfahren nach einem der Ansprüche 1 bis 7, **dadurch gekennzeichnet, dass** es mindestens einen Schritt zum Messen des Drucks in der Kammer (10) umfasst, um zu erfassen, ob die Luftdichtigkeit des Behälters (2) fehlgeschlagen ist oder nicht.

9. Verfahren nach Anspruch 8, **dadurch gekennzeichnet, dass** eine Druckmessung nach dem Schritt des Druckabbaus aus der Inspektionskammer (10) durchgeführt wird.

10. Verfahren nach Anspruch 8, **dadurch gekennzeichnet, dass** eine Druckmessung gleichzeitig mit dem Schritt des Druckabbaus aus der Inspektionskammer (10) durchgeführt wird.

## Revendications

1. Méthode d'analyse d'un composant gazeux dans un récipient hermétiquement étanche (2) ; la méthode comprenant les étapes consistant à placer le récipient (2) dans un poste de mesure (S) entre un émetteur laser (20) et un récepteur (21) ; à émettre le faisceau laser en direction du récepteur (21) et à travers la partie du récipient (2) où se trouve le composant gazeux ; à analyser le spectre d'absorption du faisceau laser par le composant gazeux ; à déduire de ladite analyse, la concentration du composant gazeux ; la méthode étant **caractérisée en ce qu'**elle comprend une étape de verrouillage du récipient (2) dans un puits de visite (10) ainsi qu'une étape de dégazage du puits de visite (10) de manière à ce qu'il ne comporte plus le gaz étant en train d'être analysé ; les étapes consistant à émettre et à réceptionner le faisceau laser étant postérieure à l'étape de dégazage et le parcours du faisceau laser étant confiné à l'intérieur du puits de visite (10).

2. Méthode selon la revendication 1, **caractérisée en ce que** l'étape de dégazage est précédée par une étape d'introduction et d'aspiration par laquelle un écoulement gazeux est respectivement introduit dans le, et extrait du puits de visite (10) ; l'écoulement percutant et enveloppant le récipient (2).

3. Méthode selon la revendication 2, **caractérisée en ce que** l'étape de dégazage est obtenue en prolongeant l'étape d'aspiration au-delà du terme de l'étape d'introduction de l'écoulement gazeux.

4. Méthode selon les revendications 2 ou 3, **caractérisée en ce que** l'écoulement gazeux consiste en de l'air sec.

5. Méthode selon les revendications 2 ou 3, **caractérisée en ce que** l'écoulement gazeux consiste en de l'azote.

6. Méthode selon les revendications 2 ou 3, **caractérisée en ce que** l'écoulement gazeux consiste en un mélange d'air sec et d'azote.

7. Méthode selon l'une quelconque des revendications de 1 à 6, **caractérisée en ce que** l'étape de dégazage crée substantiellement un vide à l'intérieur du puits de visite (10).

8. Méthode selon l'une quelconque des revendications de 1 à 7, **caractérisée en ce qu'**elle comprend au moins une étape de mesure de la pression à l'intérieur du puits (10) afin de détecter une éventuelle perte d'étanchéité à l'air du récipient (2).

9. Méthode selon la revendication 8, **caractérisée en ce qu'**une mesure de pression est effectuée après l'étape de dégazage du puits de visite (10).

10. Méthode selon la revendication 8, **caractérisée en ce qu'**une mesure de pression est effectuée en même temps que l'étape de dégazage du puits de visite (10).
